# EUROPEAN PATENT APPLICATION

(11) **EP 4 838 938 A1**
(43) Date of publication of application: **11.11.2026**
(21) Application number: 24914615.0
(22) Date of filing: 04.01.2024
(51) Int. Cl.: H04W 24/06, H04L 41/16

(54) **INFORMATION TRANSCEIVING METHOD AND APPARATUS**

(71) Applicant: 1FINITY INC., Kawasaki-shi, Kanagawa 211-8588 (JP)
(72) Inventor: GENG, Tingting, Beijing 100022 (CN)
(74) Representative: Haseltine Lake Kempner LLP
(86) International application number: PCT/CN2024/070599
(87) International publication number: WO 2025/145385

(57) **Abstract**

Embodiments of this disclosure provide an information transceiving method and apparatus. The method includes: receiving, by a user equipment, first information transmitted by a first device; and reporting user equipment assistance information and/or network device assistance information by the user equipment to the first device according to the first information. data is generated

## Description

### Technical Field

This disclosure relates to the field of communication technologies.

### Background

Multiple scenarios or sub-scenarios are defined in an air interface artificial intelligence/machine learning (AI/ML) project in 3GPP R18, such as CSI enhancement (which may also include at least one of sub-scenario of CSI compression and CSI prediction), beam management, positioning, or other scenarios. In 3GPP R19, new scenario types are considered in an AI/ML-based mobility subject, such as normal handover, conditional handover, and Layer-1/Layer-2(L1/L2) triggered mobility (LTM). Different scenarios or sub-scenarios may correspond to one or more features/feature groups. The aforementioned features/feature groups, to which AI/ML is applied, are referred to as AI/ML-based or AI/ML-enabled features/feature groups. An AI/ML-based or AI/ML-enabled feature/feature group may correspond to one or more AI functionalities and/or one or more AI models.

In order to obtain a corresponding model, data-based model training needs to be performed, and accordingly, a model training network element needs to acquire corresponding artificial intelligence related data. The artificial intelligence related data may be at least one of L1 and/or L3 measurement result information and ground truth value. For the above scenario, the model training network element needs to collect at least one of the corresponding L1 and/or L3 data and ground truth value. The measurement result information includes at least one of the following information: a reference signal receiving power (RSRP), a reference signal receiving quality (RSRQ), a reference signal strength indicator (RSSI), a signal to interference plus noise ratio (SINR), a channel quality indicator (CQI), a precoding matrix indicator (PMI), a CSI reference signal resource indicator (CRI), an SS/PBCH block resource indicator (SSBRI), a layer indicator (LI), a rank indicator (RI), a precoding matrix, a raw channel matrix, right singular vectors of the channel matrix, scalar quantization information, codebook-based quantization information, or other signal quality information. The ground truth value refers to a measured value that may serve as a reference. In general, the ground truth value is a relative concept, which is a measured value obtained in a relatively reliable measurement manner.

Taking the CSI enhancement scenario as an example, the model training network element needs to collect at least one of the following data: a channel quality indicator (CQI), a precoding matrix indicator (PMI), a CSI reference signal resource indicator (CRI), an SS/PBCH block resource indicator (SSBRI), a layer indicator (LI), a channel matrix, right singular vectors of the channel matrix, a rank indicator (RI), an L1-RSRP, an L1 SINR, a ground truth value, or other L1 measurement result information. Taking beam management as an example, the model training network element needs to collect at least one of the following data: a precoding matrix, a raw channel matrix, scalar quantization information, codebook-based quantization information, beam measurement result information, a ground truth value, or other measurement result information.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

It was found by the inventors that after the introduction of AI/ML, there may exist a need to collect assistance information generated by artificial intelligence related data to support artificial intelligence related model training. In existing methods, mechanism for collecting assistance information generated by artificial intelligence related data has not been considered.

In order to solve at least one of the above problems or other similar problems, embodiments of this disclosure provide an information transceiving method and apparatus.

According to one aspect of the embodiments of this disclosure, there is provided an information transceiving apparatus, configured in a user equipment (UE), wherein the apparatus includes:
a receiving unit configured to receive first information transmitted by a first device; and
a transmitting unit configured to report user equipment assistance information and/or network device assistance information to the first device according to the first information.

According to another aspect of the embodiments of this disclosure, there is provided an information transceiving apparatus, configured in a second device, wherein the apparatus includes:
a transmitting unit configured to transmit second information to a first device; and
a receiving unit configured to receive user equipment assistance information and/or network device assistance information transmitted by the first device according to the second information.

According to a further aspect of the embodiments of this disclosure, there is provided an information transceiving apparatus, configured in a first device, wherein the apparatus includes:
a transmitting unit configured to transmit first information to a user equipment; and
a receiving unit configured to receive user equipment assistance information and/or network device assistance information reported by the user equipment according to the first information.

According to still another aspect of the embodiments of this disclosure, there is provided an information transceiving method, applicable to a user equipment (UE), wherein the method includes:
receiving, by the user equipment, first information transmitted by a first device; and
reporting user equipment assistance information and/or network device assistance information by the user equipment to the first device according to the first information.

According to yet another aspect of the embodiments of this disclosure, there is provided an information transceiving method, applicable to a second device, wherein the method includes:
transmitting second information by the second device to a first device; and
receiving, by the second device, user equipment assistance information and/or network device assistance information transmitted by the first device according to the second information.

According to yet further aspect of the embodiments of this disclosure, there is provided an information transceiving method, applicable to a first device, wherein the method includes:
transmitting first information by the first device to a user equipment; and
receiving, by the first device, user equipment assistance information and/or network device assistance information reported by the user equipment according to the first information.

An advantage of the embodiments of this disclosure exists in that the user equipment transmits user equipment assistance information and/or network device assistance information to the first device according to the first information transmitted by the first device, so that the first device may better classify the received artificial intelligence related data according to the respective assistance information, thereby training more targeted models. Furthermore, the first device may determine, according to the respective assistance information, applicability information of the trained models, so that the models are deployed, as much as possible, under configurations and/or environments indicated by the applicability information, thereby obtaining better model inference performance.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of an information transceiving method of the embodiments of this disclosure;
FIG. 2 is a schematic diagram of information exchange between a user equipment and a first device of the embodiments of this disclosure;
FIG. 3 is another schematic diagram of information exchange between the user equipment and the first device of the embodiments of this disclosure;
FIG. 4 is a further schematic diagram of information exchange between the user equipment and the first device of the embodiments of this disclosure;
FIG. 5 is still another schematic diagram of information exchange between the user equipment and the first device of the embodiments of this disclosure;
FIG. 6 is a schematic diagram of an information transceiving method of the embodiments of this disclosure;
FIG. 7 is a schematic diagram of information exchange between a first device and a second device of the embodiments of this disclosure;
FIG. 8 is another schematic diagram of information exchange between the first device and the second device of the embodiments of this disclosure;
FIG. 9 is a schematic diagram of an information transceiving method of the embodiments of this disclosure;
FIG. 10 is a schematic diagram of an information transceiving apparatus 1000 of the embodiments of this disclosure;
FIG. 11 is a schematic diagram of an information transceiving apparatus 1100 of the embodiments of this disclosure;
FIG. 12 is a schematic diagram of an information transceiving apparatus 1200 of the embodiments of this disclosure;
FIG. 13 is a schematic diagram of a communication system of the embodiments of this disclosure;
FIG. 14 is a schematic diagram of a network device of the embodiments of this disclosure; and
FIG. 15 is a schematic diagram of a user equipment of the embodiments of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, scenarios containing a network device and/or a user equipment are taken as examples.

In the above scenarios, the network device may include at least one of a core network device, a third-party application device, operation administration and maintenance (OAM), or an access network device.

The core network device may refer to a device in a core network (CN) providing service support to a user equipment. As some instances, the core network device may be at least one of the following: a mobility and management entity (MME), an access and mobility management function (AMF) entity, a session management function (SMF) entity, a user plane function (UPF) entity, or a location management function (LMF) entity, etc., which shall not be enumerated herein any further. The AMF entity may be responsible for access management and mobility management of a terminal device or a user equipment, the SMF entity may be responsible for session management, such as establishment of a user session, and the UPF entity may be a functional entity of a user plane, and is mainly responsible for connection to external networks. The LMF entity may manage overall coordination and scheduling of resources required by a location of a user equipment registered to the core network device or accessed to the core network device. It should be noted that in this disclosure, an entity may also be referred to as a network element or a functional entity, for example, the AMF entity may also be referred to as an AMF network element or an AMF functional entity, etc.

The third-party application device may be an OTT server (over the top server) or another third-party device.

The OAM may be a network device that performs operations, administration, maintenance, and other management tasks on the network according to actual needs of network operations of an operator.

The access network device is an access device through which a terminal device or a user equipment accesses a communication system in a wireless manner. The access network device may be a base station (BS), an evolved base station (evolved NodeB, eNodeB), a transmission reception point (TRP), a base station in a fifth generation (5G) mobile communication system (next generation NodeB, gNB), a base stations in a sixth generation (6G) mobile communication system, a base station in a future mobile communication system or access node in a WiFi system, etc.; the access network device may also be a module or unit that completes a part of functions of a base station, for example, it may be at least one of the following modules or units: a centralized unit (CU), a distributed unit (DU), a centralized unit control plane (CU-CP), a centralized unit user plane (CU-UP), an integrated access backhaul (IAB), or other modules or units. Specific techniques and/or specific device forms adopted by the access network device are not limited in the embodiments of this disclosure. The access network device may be deployed on the land, including indoors/outdoors, and may be handheld or on-board; and it may also be deployed on a water surface, an airplane, a balloon or a satellite. The access network device may be deployed at a fixed location or on a mobile carrier, which is not limited in the embodiments of this disclosure.

In the above scenarios, the user equipment is an equipment having a function of wireless transmission and reception, and may transmit signals to the access network device and/or receive signals from the access network device. The user equipment may also be referred to as a terminal device, a mobile station, and a mobile terminal, etc. The user equipment may be a mobile phone, a tablet, or other equipments having a function of wireless intelligent transmission and reception. The user equipment may be widely used in various scenarios, such as device-to-device (D2D), vehicle to everything (V2X) communication, machine-type communication (MTC), Internet of Things (IoT), virtual reality, augmented reality, industrial control, autonomous driving, telemedicine, or various intelligent scenarios.

In the above scenarios, communication may be performed between the access network device and the user equipment and between user equipments via licensed spectrum or via unlicensed spectrum, or via licensed spectrum and unlicensed spectrum simultaneously. Spectrum resources used in the wireless communication are not limited in the embodiments of this disclosure.

In the following description of this disclosure, artificial intelligence (AI) may also be referred to as artificial intelligence/machine learning (AI/ML) or machine learning (ML), and these terms are interchangeable. For example, "an AI-based feature or feature group" and "an AI/ML-based feature or feature group" have identical meanings, and their corresponding English words may be AI/ML-based feature/FG.

In the above scenarios, if the collected data are classified, such as according to the assistance information when the data is generated, a model training device may train a model that is better matched to a scenario corresponding to the assistance information, thereby obtaining higher model performance. In general, the assistance information may be used to indicate configuration information and/or environment information when the data is generated. It can be understood that the assistance information may be divided into two categories: network side assistance information and user equipment side assistance information. In existing mechanisms, there is currently no corresponding solution regarding the specific content of the assistance information, as well as the collection/reporting mechanism of the assistance information.

In order to solve at least one of the above problems, embodiments of this disclosure provide an information transceiving method and apparatus.

The embodiments of this disclosure shall be described below with reference to the accompanying drawings and implementations. For ease of description, following description shall be given by taking a base station serving as an access network device as an example. In the following description, without causing confusion, "if...", "in a case where..." and "when..." are interchangeable.

### Embodiments of a first aspect

The embodiments of this disclosure provide an information transceiving method, which shall be described from a user equipment side.

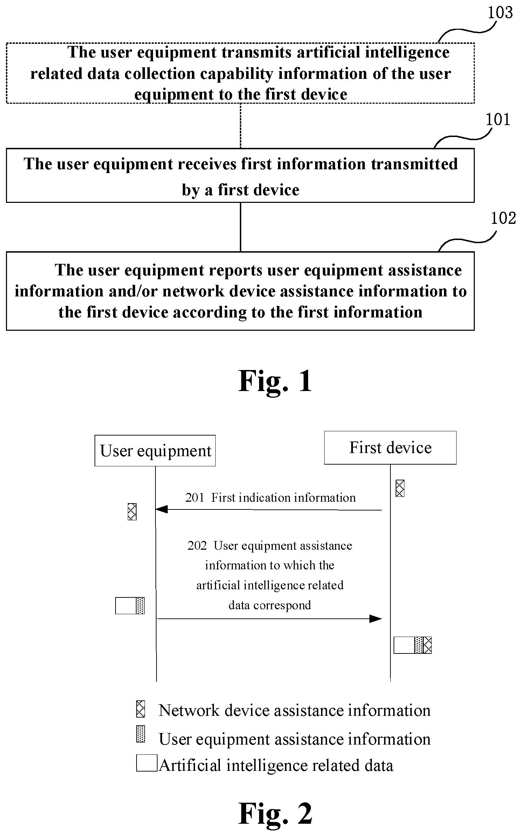

FIG. 1 is schematic diagram of the information transceiving method of the embodiments of this disclosure. As shown in FIG. 1, the method includes:
101: The user equipment receives first information transmitted by a first device; and
102: The user equipment reports user equipment assistance information and/or network device assistance information to the first device according to the first information.

It should be noted that FIG. 1 only schematically illustrates the embodiments of this disclosure; however, this disclosure is not limited thereto. For example, an order of execution of the steps may be appropriately adjusted, and furthermore, some other steps may be added, or some steps therein may be reduced. And appropriate variants may be made by those skilled in the art according to the above contents, without being limited to what is contained in FIG. 1.

According to the above embodiment, the user equipment transmits the user equipment assistance information and/or the network device assistance information to the first device according to the first information transmitted by the first device, so that the first device may better classify the received artificial intelligence related data according to the respective assistance information, thereby training more targeted models. Furthermore, the first device may determine, according to the respective assistance information, applicability information of the trained models, so that the models are deployed, as much as possible, under configurations and/or environments indicated by the applicability information, thereby obtaining better model inference performance.

In some embodiments, the first device may be an access network device, for example, the first device is an access device through which the user equipment accesses a communication system in a wireless manner. Reference may be made to the above introduction to the "access network device" for specific contents of this "first device", which shall not be repeated herein any further.

In some embodiments, the user equipment assistance information and/or network device assistance information include(s) at least one of the following information: user equipment (UE) environment information and/or configuration information; network device (NW) environment information and/or configuration information; user equipment (UE) location information; or identity information of a user equipment (UE) and/or a network device (NW).

Specific contents of the "user equipment assistance information and/or network device assistance information" shall be described below in detail.

In some embodiments, the user equipment (UE) environment information and/or configuration information include(s) at least one of the following information: speed information of the user equipment; computing speed information of the user equipment; serving cell information of the user equipment; or channel model information between the user equipment and the network device.

For example, the speed information of the user equipment is used to indicate speed information determined by the user equipment, which may be instantaneous speed information, and may also be average speed information. The computing speed information of the user equipment is used to indicate computing capability information that the user equipment may provide for running the model. The serving cell information of the user equipment may include at least one of the following information: a cell global identifier (CGI), a physical cell identifier (PCI) and frequency information, a cell identifier (ID), a non-public network identifier (NPN ID), a non-terrestrial network identifier (NTN ID), or other cell identifiers. For example, the CGI may include a public land mobile network identifier (PLMN ID) and a cell ID. Optionally, the cell information may further include a tracking area code (TAC) and/or identification information of a network device to which the cell belongs, such as a global network device identifier. The channel model information between a user equipment and a network device includes information related to a line of sight (LOS) model, or a non-line of sight (NLOS) model, etc. It should be understood that the environment information and/or configuration information of the user equipment (UE) may also include other information, which is not limited in this disclosure.

For example, the "user equipment (UE) environment information and/or configuration information" may be specific environment information and/or configuration information, or identification or index information to which environment information and/or configuration information correspond(s). Based on the identification or index information, the corresponding specific environment and/or configuration information may be determined. For example, the correspondence(s) between the user equipment environment information and/or configuration information and its identification or index information may be predefined in a protocol or determined by the user equipment or a management device of the user equipment (such as at least one of a management device of a terminal device vendor, an OTT server, or a management device of a terminal chip vendor, and OAM). When the first device receives the aforementioned identification or index information, it may determine, based on a correspondence predefined by a protocol or a correspondence acquired from other devices (such as a user equipment, a management device of the user equipment, a core network device, OAM, or another network device), the user equipment environment information and/or configuration information to which the identification or index information corresponds.

In some embodiments, the network device (NW) environment information and/or configuration information include(s) at least one of the following information: antenna configuration information of the network device; beam configuration information of the network device; coverage configuration information of the network device; or state information of the network device.

For example, the antenna configuration information of the network device may include at least one of the following configuration information: tilt angle information under an antenna, the number of antennas, analog antenna, digital antenna, or physical antenna, etc. The beam configuration information of the network device may include at least one of the following configuration information: beam width information, the number of beams, beam identification information, beam index information, or beam scanning information, etc. The coverage configuration information of the network device may include at least one of the following configuration information: frequency information, maximum transmit power information, coverage range information, indoor, or outdoor, etc. The state information of the network device may include at least one of the following state information: whether a capacity station and coverage station enable network energy saving, or network energy-saving configuration information, etc. The network device (NW) environment information and/or configuration information may further include other information, which is not limited in this disclosure.

For example, the "network device (NW) environment information and/or configuration information" may be specific environment information and/or configuration information, and may also be identification or index information to which the environment information and/or configuration information correspond(s). For example, correspondence(s) between the network device environment information and/or configuration information and its identification or index information may be predefined in a protocol or determined by a management device of the network device (such as at least one of a core network device and OAM). When another device receives the aforementioned identification or index information, it may determine, based on a correspondence predefined by the protocol or an acquired correspondence, the network device environment information and/or configuration information to which the aforementioned identification or index information correspond(s). As an example, the first device may transmit the network device environment information and/or configuration information to the user equipment, so that when the user equipment reports data, it may further report the network device environment information and/or configuration information to which the data correspond.

In some embodiments, the user equipment (UE) location information, for example, in a cell-level scenario, may be acquired by the user equipment by positioning, etc; or, the user equipment (UE) location range information may also be acquired via signal quality information, which is not limited in this disclosure.

In some embodiments, the identity information of the user equipment (UE) and/or the network device (NW) includes at least one of the following information: vendor information of the user equipment; chip vendor information of the user equipment; network vendor information of the network device; or operator information. By introducing the identity information, it is possible to ensure the privacy of relevant data and models trained based on the relevant data, such as sharing data and/or models only between user equipments and/or network devices indicated by the corresponding identity information.

In some embodiments, the method further includes: the user equipment transmits collected artificial intelligence related data to the first device. The artificial intelligence related data may be at least one of L1 and/or L3 measurement result information and ground truth value.

For example, the user equipment may transmit the artificial intelligence related data and the user equipment assistance information and/or network device assistance information to the first device via multiple signalings, or, the user equipment may transmit the artificial intelligence related data and the user equipment assistance information and/or network device assistance information to the first device via one signaling.

For example, taking a scenario of CSI enhancement as an example, the artificial intelligence related data transmitted by the user equipment include at least one of the following data: a channel quality indicator (CQI), a precoding matrix indicator (PMI), a CSI reference signal resource indicator (CRI), an SS/PBCH block resource indicator (SSBRI), a layer indicator (LI), a channel matrix, right singular vectors of the channel matrix, a rank indicator (RI), L1-RSRP, an L1-SINR, a ground truth value, or other L1 measurement result information, etc. Taking beam management as an example, the artificial intelligence related data transmitted by the user equipment include at least one of the following data: a precoding matrix, a raw channel matrix, scalar quantization information, codebook-based quantization information, beam measurement result information, a ground truth value or other measurement result information, etc. For example, the artificial intelligence related data transmitted by the user equipment may further include other data, which are not limited in this disclosure.

In some embodiments, modes for transmitting the artificial intelligence related data by the user equipment include immediate transmission, buffered transmission, or transmission based on a request from a network device, etc.

For example, the immediate transmission may be real-time transmission of artificial intelligence related data by the user equipment to the network device after collecting the data. The buffer transmission refers that user equipment does not immediately report artificial intelligence related data to the network device after collecting the data. For example, after collecting multiple artificial intelligence related data over a period of time, the user equipment reports the data to the network device in a unified manner. The transmission based on a request of the network device may be that when the user equipment receives artificial intelligence related data reporting request indication information from the network device, the user equipment transmits corresponding artificial intelligence related data to the network device.

In some embodiments, the method further includes: the user equipment transmits generation time information of artificial intelligence related data to the first device.

For example, in a case where the user equipment does not immediately transmit the collected artificial intelligence related data, the user equipment may further indicate generation time information of each of artificial intelligence related data.

As a possible implementation, the user equipment reports absolute time information of a first or last time of generation of artificial intelligence related data and relative time information of other artificial intelligence related data to this absolute time information; or, the user equipment reports absolute time information of each time of generation of artificial intelligence related data.

Therefore, when the network device receives the artificial intelligence related data transmitted by the user equipment, and the assistance information of the user equipment corresponding to the artificial intelligence related data, and/or the generation time information of the assistance information of the user equipment corresponding to the artificial intelligence related data, the network device may further determine and/or supplement the assistance information of the network device corresponding to the artificial intelligence related data, so as to perform more targeted management on the artificial intelligence related data. For example, in a case where the user equipment has reported the generation time information of the artificial intelligence related data, when the network device (such as the first device) has updated the assistance information of the network device, the network device (such as the first device) may identify the assistance information of the network device when the artificial intelligence related data of the user equipment are generated according to the above generation time information, which may more accurately manage the artificial intelligence related data and improve reliability of data management.

In some embodiments, the method further includes:
103: The user equipment transmits artificial intelligence related data collection capability information of the user equipment to the first device.

It may be understood that FIG. 1 is illustrative only, and step 103 is optional. Step 103 may be executed before step 101, may be executed after step 101, or may not be executed, and the embodiments of this disclosure are not limited thereto.

For example, the artificial intelligence related data collection capability information is used to indicate a capability to collect artificial intelligence related data supported by the user equipment.

For example, the artificial intelligence related data collection capability information may be represented by a 1-bit information element. When the information element is included, it indicates the capability to collect artificial intelligence related data supported by the user equipment; and/or, when the information element is not included, it indicates a capability to collect artificial intelligence related data not supported by the user equipment. Or, when a bit value of the information element is a first value, it indicates the capability to collect artificial intelligence related data supported by the user equipment, and/or when the bit value is a second value, it indicates a capability to collect artificial intelligence related data not supported by the user equipment. As an example, the first value may be 1 and the second value may be 0; or, the first value may be 0 and the second value may be 1, and the embodiments of this disclosure are not limited thereto.

After the "user equipment assistance information and/or network device assistance information" are described above in detail, the "first information" and the interaction between the user equipment and the first device in this disclosure shall be described below with reference to specific embodiments.

### (I) Embodiment 1

In this embodiment, taking FIG. 2 as an example, the first device involved may be a base station or a CU or other access network devices, and the embodiments of this disclosure are not limited thereto.

In some embodiments, the first information includes first indication information, and according to the first indication information, the user equipment reports the user equipment assistance information to which the artificial intelligence related data correspond when the artificial intelligence related data is generated.

FIG. 2 is a schematic diagram of information exchange between the user equipment and the first device of the embodiments of this disclosure. As shown in FIG. 2, the method includes:
201: The first device transmits the first indication information to the user equipment; and
202: The user equipment reports the user equipment assistance information to which the artificial intelligence related data correspond when the artificial intelligence related data is generated to the first device.

As a possible implementation, the "first indication information" in step 201 may be carried by an AI related data collection request message, or the "first indication information" may also be carried by other messages, which is not limited in this disclosure. As a possible implementation, the user equipment assistance information in step 201 may be carried by a message of the artificial intelligence related data reported by the user equipment, or the user equipment assistance information may also be carried by other messages, which is not limited in this disclosure.

In some embodiments, before step 201 (not shown), the first device may further acquire user equipment artificial intelligence related data collection capability information, and the first device may receive user equipment artificial intelligence related data collection capability information transmitted by the user equipment or the core network device or other access network devices than the first device. Reference may be made to the above implementation for detailed contents of the "user equipment artificial intelligence related data collection capability information", which shall not be repeated herein any further.

In some embodiments, the first device is able to acquire the network device assistance information. For example, the first device may acquire assistance information of a current first device itself.

In some embodiments, after step 202 or in step 202 (not shown), the user equipment further transmits the generation time information of the artificial intelligence related data to the first device, the generation time information being used for the first device to determine the network device assistance information when the artificial intelligence related data is generated. For example, in a case where the user equipment reports the generation time information of the artificial intelligence related data, when the first device has updated the network device assistance information, the first device may, according to the above generation time information, identify the assistance information of the network device when the artificial intelligence related data of the user equipment is generated, which may more accurately manage the artificial intelligence related data, and improve reliability of data management.

In some embodiments, after step 202 (not shown), when the first device receives the artificial intelligence related data transmitted by the user equipment and the assistance information of the user equipment to which the artificial intelligence related data correspond and/or the generation time information of the assistance information of the user equipment to the artificial intelligence related data correspond, optionally, the first device may further determine and/or supplement the assistance information of the network device to which the artificial intelligence related data correspond, thereby performing targeted management on the artificial intelligence related data.

### (II) Embodiment 2

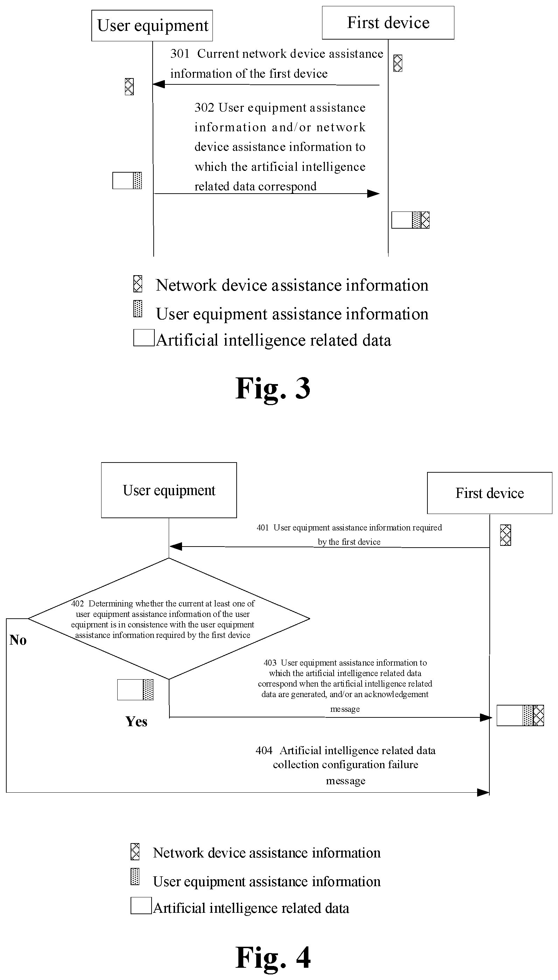

In this embodiment, taking FIG. 3 as an example, the first device involved may be a base station or a CU or other access network devices, and the embodiments of this disclosure are not limited thereto.

In some embodiments, the first information includes current network device assistance information of the first device, and according to the current network device assistance information of the first device, the user equipment reports the user equipment assistance information and/or network device assistance information to which the artificial intelligence related data correspond when the artificial intelligence related data is generated.

FIG. 3 is another schematic diagram of information exchange between the user equipment and the first device of the embodiments of this disclosure. As shown in FIG. 3, the method includes:
301: The first device transmits the current network device assistance information of the first device to the user equipment; and
302: The user equipment reports, according to the current network device assistance information of the first device, the user equipment assistance information and/or network device assistance information to which the artificial intelligence related data correspond when the artificial intelligence related data is generated.

As a possible implementation, the network device assistance information in step 301 may be carried by the artificial intelligence related data collection request message transmitted by the first device to the user equipment, or the network device assistance information may also be carried by other messages, which is not limited in this disclosure. As a possible implementation, the user equipment assistance information and/or network device assistance information in step 302 may be carried by a message of the artificial intelligence related data reported by the user equipment, or may be carried by other messages, which is not limited in this disclosure.

In some embodiments, as shown in FIG. 3, the first information may first include first indication information, and reference may be made to the description in Embodiment 1 for specific contents of the first indication information, which shall not be repeated herein any further. Correspondingly, in step 301, the "current network device assistance information of the first device" and "first indication information" (not shown) are transmitted in step 301.

In some embodiments, before step 301 (not shown), the first device may further acquire user equipment artificial intelligence related data collection capability information, which is, for example, identical to that described in Embodiment 1, which shall not be repeated herein any further.

In some embodiments, the first device is able to acquire the network device assistance information, which is, for example, identical to that described in Embodiment 1, which shall not be repeated herein any further.

In some embodiments, after or in step 302 (not shown), the user equipment further transmits the generation time information of the artificial intelligence related data to the first device, which is, for example, identical to that described in Embodiment 1, which shall not be repeated herein any further.

### (III) Embodiment 3

In this embodiment, taking FIG. 4 as an example, the first device involved may be a base station or a CU or other access network devices, and the embodiments of this disclosure are not limited thereto.

In some embodiments, the first information includes user equipment assistance information required by the first device.

In some embodiments, when the user equipment determines that current at least one of user equipment assistance information is consistent with the user equipment assistance information required by the first device, the user equipment reports the user equipment assistance information to which the artificial intelligence related data correspond when the artificial intelligence related data is generated and/or an acknowledgement message to the first device, wherein the acknowledgement message is used to indicate that the user equipment has determines that current at least one of user equipment assistance information is consistent with the user equipment assistance information required by the first device, and/or that when the user equipment determines that current at least one of user equipment assistance information is not consistent with the user equipment assistance information required by the first device, the user equipment transmits an artificial intelligence related data collection configuration failure message to the first device.

FIG. 4 is a further schematic diagram of information exchange between the user equipment and the first device of the embodiments of this disclosure. As shown in FIG. 4, the method includes:
401: The first device transmits the user equipment assistance information required to the user equipment; and
402: The user equipment determines whether the current at least one of user equipment assistance information of the user equipment is consistent with the user equipment assistance information required by the first device;
it may be understood that in step 403, the user equipment determines whether the current at least one of user equipment assistance information of the user equipment is of the same type as the user equipment assistance information required by the first device; for example, the user equipment assistance information required by the first device is {low speed, indoor}, current user equipment assistance information at the user equipment side is {low speed, indoor, LOS}, and the user equipment needs to determine that the user equipment assistance information required by the first device is speed information and environment information; hence, the user equipment only needs to determine whether current speed and/or environment information of the user equipment is consistent with the user equipment assistance information required by the first device;
403: When the user equipment determines that current at least one of user equipment assistance information is consistent with the user equipment assistance information required by the first device, the user equipment reports to the first device, the user equipment assistance information to which the artificial intelligence related data correspond when the artificial intelligence related data is generated, and/or, the user equipment transmits an acknowledgement message to the first device, the acknowledgement message being used to indicate that the current at least one of user equipment assistance information of the user equipment is consistent with the user equipment assistance information required by the first device;
furthermore, after step 403 (not shown), the user equipment may transmit the artificial intelligence related data to the first device;
for example, taking that the user equipment assistance information required by the first device is {low speed, indoor} and the current user equipment assistance information at the user equipment side is {low speed, indoor, LOS} as examples, the user equipment determines that current speed information {low speed} of the user equipment is consistent with speed information {low speed} in the user equipment assistance information required by the first network device, and/or the user equipment determines that current environment information {indoor} of the user equipment is consistent with environment information {indoor} in the user equipment assistance information required by the first network device, and the user equipment reports the user equipment assistance information to which the artificial intelligence related data correspond when the artificial intelligence related data is generated to the first device, and/or transmits acknowledgement message to the first device;
404: When the user equipment determines that the current at least one of user equipment assistance information is not consistent with the user equipment assistance information required by the first device, the user equipment transmits an artificial intelligence related data collection configuration failure message to the first device.

For example, the user equipment assistance information required by the first device is {low speed, indoor}, the current user equipment assistance information at the user equipment side is {serving cell (PCI), LOS} or {high speed, indoor}, the user equipment determines that user equipment assistance information required by a first device is not consistent with the user equipment assistance information required by the first device, and the user equipment transmits the artificial intelligence related data collection configuration failure message to the first device.

As a possible implementation, the required user equipment assistance information in step 401 may be carried by an artificial intelligence related data collection request message, or the required user equipment assistance information may also be carried by other messages, which is not limited in this disclosure. As a possible implementation, reference may be made to the description of step 202 for a reporting mode of the user equipment assistance information in step 403, which shall not be repeated herein any further.

In some embodiments, when the user equipment determines that the current at least one of user equipment assistance information is consistent with the user equipment assistance information required by the first device, the user equipment may further transmit an artificial intelligence related data collection configuration complete message to the first device.

In some embodiments, acquiring the network device assistance information by the first device is as described in Embodiment 1, which shall not be repeated herein any further.

In some embodiments, before step 401 (not shown), the first device may further acquire user equipment artificial intelligence related data collection capability information, and reference may be made to the above implementation for corresponding detailed contents of the information, which shall not be repeated herein any further.

### (IV) Embodiment 4

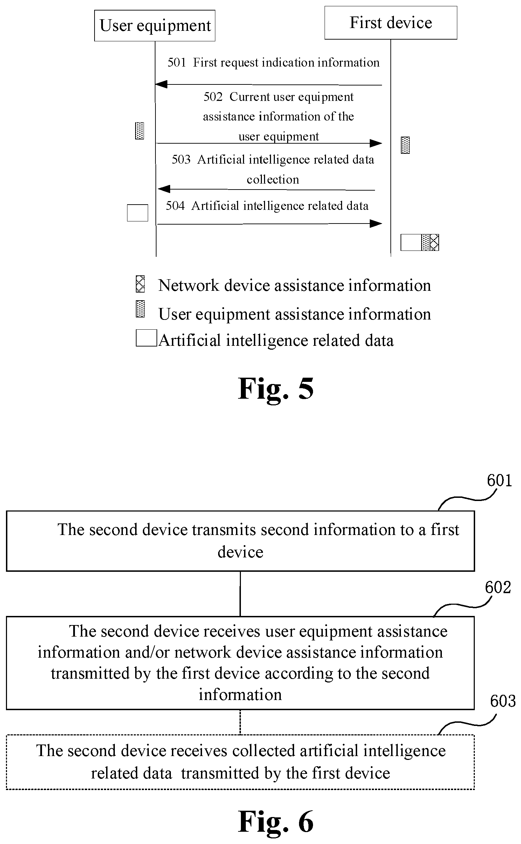

In this embodiment, taking FIG. 5 as an example, the first device involved may be a base station or a CU or other access network devices, which is not limited in the embodiments of this disclosure.

In some embodiments, the first information includes first request indication information, and the user equipment reports the current user equipment assistance information according to the first request indication information.

In some embodiments, the user equipment further receives report configuration information transmitted by the first device, wherein the report configuration information is used to indicate an assistance information report configuration of the user equipment.

In some embodiments, the report configuration information includes change report indication information of at least one of user equipment assistance information, and/or change threshold information of at least one of user equipment assistance information.

In some embodiments, the report configuration information includes change report indication information for at least one of user equipment assistance information, and/or change threshold information for at least one of user equipment assistance information.

In some embodiments, in a case where the report configuration information includes the change report indication information of at least one of user equipment assistance information, when user equipment assistance information to which at least one of the change report indication information of the user equipment corresponds is updated, the user equipment transmits the updated at least one of user equipment assistance information to the first device, and/or, in a case where the report configuration information includes change threshold information of at least one of user equipment assistance information, when update of the at least one of user equipment assistance information of the user equipment satisfies the threshold information, the user equipment transmits the updated at least one of user equipment assistance information to the first device.

FIG. 5 is still another schematic diagram of information exchange between the user equipment and the first device of the embodiments of this disclosure. As shown in FIG. 5, the method includes:
501: The first device transmits the first request indication information to the user equipment;
502: The user equipment reports the current user equipment assistance information of the user equipment according to the first request indication information;
503: The first device determines to request the user equipment to perform artificial intelligence related data collection; and
504: The user equipment transmits collected artificial intelligence related data to the first device.

As a possible implementation, the 'first request indication information' may be carried by an artificial intelligence related data collection request message, or, the 'first request indication information' may also be carried by other messages, which is not limited in this disclosure.

In some embodiments, before or after step 501 (not shown), the embodiments of this disclosure may further include: the user equipment receives the report configuration information transmitted by the first device, wherein the report configuration information is used to indicate the assistance information report configuration of the user equipment. In some possible implementations, the report configuration information includes change report indication information of at least one of user equipment assistance information, and/or change threshold information of at least one of user equipment assistance information.

In some possible implementations, in the case where the report configuration information includes change report indication information of at least one of user equipment assistance information, when at least one of user equipment assistance information to which the change report indication information of the user equipment corresponds is updated, the user equipment transmits updated at least one of user equipment assistance information to the first device, and/or, in the case where the report configuration information includes change threshold information of at least one of user equipment assistance information, when update of the at least one of user equipment assistance information of the user equipment satisfies the threshold information, the user equipment transmits updated at least one of user equipment assistance information to the first device.

For example, taking that the report configuration information includes the change report indication information of at least one of user equipment assistance information as an example, the user equipment assistance information is environment information, the environment information being indoor/outdoor. If the user equipment receives change report indication information of the above environment information, when the environment information of the user equipment changes between indoor/outdoor, the user equipment reports the updated user equipment (UE) assistance information to the first device, i.e. updated environment information. As a possible implementation, the report configuration information may be an information element (IE) "Reportingtrigging", and is set to be " environment change". If current environment information of the user equipment is indoor, when the environment information of the user equipment is changed into outdoor, the user equipment transmits new user equipment assistance information to the first device. The user equipment assistance information includes indication information for indicating that the environment information of the user equipment has changed, the indication information including outdoor; and if the environment information of the user equipment is changed into indoor, the user equipment transmits new user equipment assistance information to the first device, the user equipment assistance information including indication information for indicating that the environment information of the user equipment has changed, the indication information including indoor.

In some possible implementations, a user equipment assistance information may possibly correspond to change threshold information of the user equipment assistance information, for example, the change threshold information of the user equipment assistance information to which the user equipment assistance information corresponds is predefined.

In some possible implementations, that update of at least one of user equipment assistance information satisfies the threshold information includes that: a change of at least one of user equipment assistance information is greater than or equal to a threshold to which the user equipment assistance information corresponds, or, a change of at least one of user equipment assistance information is equal to a threshold to which the user equipment assistance information corresponds, or, a change of at least one of user equipment assistance information is less than or equal to a threshold to which the user equipment assistance information corresponds, which is not limited in this disclosure.

For example, taking that the report configuration information includes the change threshold information of at least one of user equipment assistance information as an example, the user equipment assistance information is speed information, which may be high speed (>10KM/H)/low speed (≤ 10KM/H), and a threshold of the speed information is 10KM/H, threshold information to which it corresponds being represented by a threshold index "threshold 20". When the speed information of the user equipment changes between high speed (>10KM/H)/low speed (≤ 10KM/H) and the threshold information "threshold 20" is satisfied, the user equipment reports the updated user equipment (UE) assistance information to the first device, i.e. updated speed information. As a possible implementation, the report configuration information may be an information element (IE) "Reportingtrigging", and is set to be "speed change threshold 20". If current speed information of the user equipment is high speed (>10KM/H), when the speed information of the user equipment is changed into low speed (≤ 10KM/H) and the threshold information is satisfied, the user equipment transmits new user equipment assistance information to the first device. The user equipment assistance information includes indication information indicating that the speed information of the user equipment has changed, such as indicating a low speed (≤ 10KM/H); and if the current speed information of the user equipment is low speed (≤ 10KM/H), when the speed information of the user equipment is changed into high speed (>10KM/H) and the threshold information is satisfied, the user equipment transmits new user equipment assistance information to the first device. The user equipment assistance information includes indication information for indicating that the speed information of the user equipment has changed, such as indicating a low speed (>10KM/H).

In some embodiments, acquiring the network device assistance information by the first device is as described in Embodiment 1, which shall not be repeated herein any further.

In some embodiments, after step 504, the first device may determine and/or supplement user equipment assistance information and/or network device assistance information to which the collected artificial intelligence related data correspond.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the above embodiment, the user equipment transmits the user equipment assistance information and/or the network device assistance information to the first device according to the first information transmitted by the first device, so that the first device may better classify the received artificial intelligence related data according to the respective assistance information, thereby training more targeted models. And the first device may determine, according to the respective assistance information, applicability information of the trained models, so that the models may be deployed, as much as possible, under the configuration and/or environment indicated by the applicability information, thereby obtaining better model inference performance.

### Embodiments of a second aspect

The embodiments of this disclosure provide an information transceiving method, which shall be described from a second network device side, with contents identical to those in the embodiments of the first aspect being not going to be described herein any further. The "embodiments of a second aspect" of this disclosure may be combined with the "embodiments of the first aspect", or may be implemented separately.

FIG. 6 is a schematic diagram of the information transceiving method of the embodiments of this disclosure. As shown in FIG. 6, the method includes:
601: The second device transmits second information to a first device; and
602: The second device receives user equipment assistance information and/or network device assistance information transmitted by the first device according to the second information.

According to the above embodiment, the second device may receive the user equipment assistance information and/or network device assistance information transmitted by the first device.

In some embodiments, reference may be made to relevant description of the embodiments of the first aspect for description of the "user equipment assistance information and/or network device assistance information", which shall not be repeated herein any further.

In some embodiments, reference may be made to relevant description of the embodiments of the first aspect for description of the "first device", which shall not be repeated herein any further. For example, the "first device" may be identical to the "first device" in the embodiments of the first aspect, and optionally, the "first device" may also be different from the "first device" in the embodiments of the first aspect.

In some embodiments, the "second device" may be a core network device, such as OAM, and optionally, the "second device" may also be other access network devices, access network device management device, or OTT server, etc., which is not limited in this disclosure.

In some embodiments, the second device may further transmit artificial intelligence related data collection activation information to the first device.

For example, the second device may transmit the artificial intelligence related data collection activation information to the first device via multiple signalings, or, the second device may transmit the artificial intelligence related data collection activation information to the first device via one signaling.

In some embodiments, the method includes:
603: The second device receives collected artificial intelligence related data transmitted by the first device.

The artificial intelligence related data received by the second device may be the artificial intelligence related data of the user equipment, and/or the artificial intelligence related data of the first device.

It may be understood that FIG. 6 is illustrative only, step 603 is optional, and may be executed or may not be executed, and the embodiments of this disclosure are not limited thereto.

As a possible implementation, in the case where the artificial intelligence related data received by the second device is the artificial intelligence related data of the user equipment, the first device needs to configure the user equipment to report data to which the user equipment assistance information and/or or network device assistance information in step 601 correspond(s). As a possible implementation, reference may be made to the method described in the "embodiments of the first aspect" for a mechanism for collecting the user equipment assistance information and/or the network device assistance information to the artificial intelligence related data of the user equipment correspond by the first device, which shall not be repeated herein any further.

In some embodiments, when the artificial intelligence related data received by the second device is the artificial intelligence related data of the first device, the first device transmits the artificial intelligence related data of the first device and the user equipment assistance information and/or the network device assistance information to which the artificial intelligence related data of the first device correspond to the second device.

In some embodiments, the first device receives user equipment artificial intelligence related data collection capability information transmitted by the user equipment or other access network devices than the first device or the core network device or OAM or an OTT server or an access network device management device. The artificial intelligence related data collection capability information is used to indicate an artificial intelligence related data collection capability supported by the user equipment, and correspondingly, the first device stores the user equipment artificial intelligence related data collection capability information. Reference may be made to relevant contents in the "embodiments of the first aspect" for the "artificial intelligence related data collection capability information", which shall not be repeated herein any further; and/or, the first device receives user equipment artificial intelligence related data collection permission information transmitted by the user equipment or other access network devices than the first device or the core network device or OAM or an OTT server or an access network device management device. The artificial intelligence related data collection permission information is used to indicate whether the user equipment is willing to perform artificial intelligence related data collection, and/or is used to indicate information of an area where the user equipment is willing to perform artificial intelligence related data collection, and correspondingly, the first device stores the user equipment artificial intelligence related data collection permission information.

As an example, the 'artificial intelligence related data collection permission information' may be represented by a 1-bit information element. When the information element is included, it indicates that the user equipment is willing to perform artificial intelligence related data collection; and/or, when the information element is not included, it indicates that the user equipment is unwilling to perform artificial intelligence related data collection. Or, when a bit value of the information element is a first value, it indicates that the user equipment is willing to perform artificial intelligence related data collection, and/or, when the bit value is a second value, it indicates that the user equipment is unwilling to perform artificial intelligence related data collection. As an example, the first value may be 1, and the second value may be 0; or, the first value may be 0, and the second value may be 1, and the embodiments of this disclosure are not limited thereto; or, the "artificial intelligence related data collection permission information" may be represented by a multi-bit information element. When the information element is included, it indicates the information of an area where the user equipment is willing to perform artificial intelligence related data collection, and when the information element is not included, it indicates that the user equipment is unwilling to perform artificial intelligence related data collection.

In some embodiments, the first device configures the user equipment to perform artificial intelligence related data collection according to at least one of the second information, the artificial intelligence related data collection capability information and the artificial intelligence related data collection permission information. The "configuring the user equipment to perform artificial intelligence related data collection" shall be described below with reference to specific contents of the second information, such as relevant contents in steps 704 and 804 below.

The "second information" and interaction between the first device and the second device in this disclosure shall be described below in detail with reference to specific embodiments.

### (V) Embodiment 5

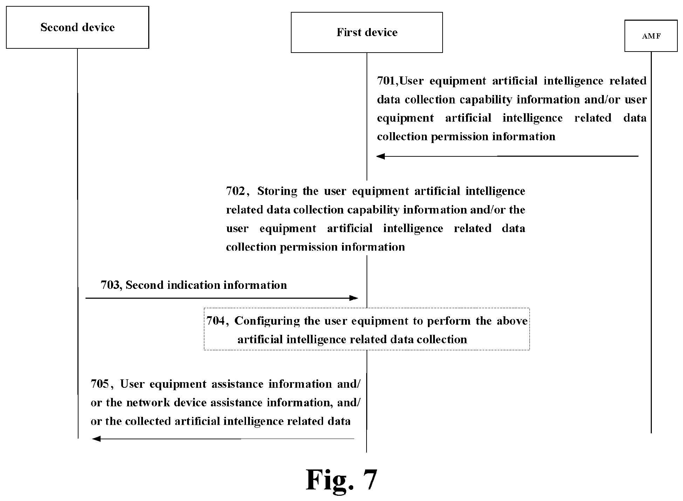

In this embodiment, taking FIG. 7 as an example, the first device involved may be a base station or a CU or other access network devices, and the second device involved may be at least one of OAM, an OTT server, or an access network device management device, etc., and the embodiments of this disclosure are not limited thereto.

In some embodiments, the second information includes second indication information, the second indication information requesting the first device to report the user equipment assistance information and/or the network device assistance information to which the collected artificial intelligence related data correspond.

FIG. 7 is a schematic diagram of information exchange between the first device and the second device of the embodiments of this disclosure. As shown in FIG. 7, the method includes:
701: The first device receives user equipment artificial intelligence related data collection capability information and/or user equipment artificial intelligence related data collection permission information transmitted by an AMF entity;
702: The first device stores the user equipment artificial intelligence related data collection capability information and/or the user equipment artificial intelligence related data collection permission information; and
703: The second device transmits the second indication information to the first device.

Optionally, artificial intelligence related data collection activation information may also be transmitted in step 703.

Optionally, the method may further include:
704: The first device configures the user equipment to perform the above artificial intelligence related data collection.

As an implementation, in step 704, the first device selects a user equipment and configures the user equipment to perform the above artificial intelligence related data collection according to the second indication information and the "stored user equipment artificial intelligence related data collection capability information and/or the user equipment artificial intelligence related data collection permission information".

As a possible implementation, reference may be made to relevant contents in the "embodiments of the first aspect" for the interaction of "the user equipment assistance information" and "the artificial intelligence related data collection" between the first device and the user equipment. For example, with at least one of "Embodiment 1" to "Embodiment 4" in the "embodiments of the first aspect", the first device acquires the artificial intelligence related data reported by the user equipment and the user equipment assistance information and/or network device assistance information to which the data correspond, and transmits the user equipment assistance information and/or the network device assistance information to which the artificial intelligence related data correspond to the second device in subsequent step 705.

705: The second device receives the user equipment assistance information and/or the network device assistance information transmitted by the first device according to the second information, and/or, the second device receives the collected artificial intelligence related data transmitted by the first device.

### (VI) Embodiment 6

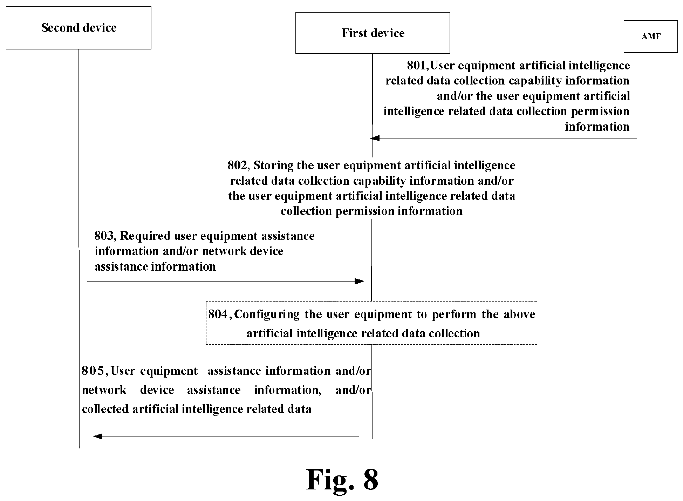

In this embodiment, taking FIG. 8 as an example, the first device involved may be a base station or a CU or other access network devices, and the second device involved may be at least one of OAM, an OTT server, or an access network device management device, etc., and the embodiments of this disclosure are not limited thereto.

In some embodiments, the second information includes user equipment assistance information and/or network device assistance information required by the second device.

In some embodiments, the second information further includes valid time information, which is used to indicate a valid time of the above required user equipment assistance information and/or network device assistance information.

In some embodiments, in a case where the second information includes the network device assistance information required by the second device, when the first device determines that current at least one of network device assistance information is consistent with the network device assistance information required by the second device, the first device determines to collect artificial intelligence related data to which the network device assistance information correspond; or, in a case where the second information includes the user equipment assistance information and network device assistance information required by the second device, when the first device determines that current at least one of network device assistance information is consistent with the network device assistance information required by the second device, the first device determines to collect the artificial intelligence related data to which the user equipment assistance information and the network device assistance information correspond.

FIG. 8 is another schematic diagram of information exchange between the first device and the second device of the embodiments of this disclosure. As shown in FIG. 8, the method includes:
801: The first device receives the user equipment artificial intelligence related data collection capability information and/or the user equipment artificial intelligence related data collection permission information transmitted by the AMF entity;
802: The first device stores the user equipment artificial intelligence related data collection capability information and/or the user equipment artificial intelligence related data collection permission information; and
803: The second device transmits the required user equipment assistance information and/or network device assistance information to the first device.

Optionally, artificial intelligence related data collection activation information may also be transmitted in step 803.

Optionally, the method may further include:
804: The first device configures the user equipment to perform the above artificial intelligence related data collection.

For example, in a case where the second information includes the network device assistance information required by the second device, when the first device determines that current at least one of network device assistance information is consistent with the network device assistance information required by the second device, the first device determines to collect artificial intelligence related data to which the network device assistance information correspond; or, in a case where the second information includes the user equipment assistance information and the network device assistance information required by the second device, when the first device determines that current at least one of network device assistance information is consistent with the network device assistance information required by the second device, the first device determines to collect artificial intelligence related data to which the user equipment assistance information and the network device assistance information correspond. Reference may be made to the "embodiments of the first aspect" and relevant contents in "704" for "how the first device determines to collect artificial intelligence related data to which the network device assistance information correspond" or "how the first device determines to collect artificial intelligence related data to which the user equipment assistance information and the network device assistance information correspond", which shall not be repeated herein any further.

As a possible implementation, reference may be made to relevant contents in the "embodiments of the first aspect" for the interaction of the "user equipment assistance information" and the "artificial intelligence related data collection" between the first device and the user equipment. For example, for "Embodiment 1" to "Embodiment 3" in the "embodiments of the first aspect", the first device requests the user equipment to report the "user equipment assistance information" and collect user equipment artificial intelligence related data. Hence, in a case where the first device determines that at least one of "user equipment assistance information" reported by the user equipment corresponds to "user equipment assistance information to which the user equipment artificial intelligence related data correspond needing to be collected" indicated by the second device, the first device determines that corresponding artificial intelligence related data may be transmitted to the second device (such as in subsequent step 805). Optionally, the first device may further transmit the user equipment assistance information and/or network device assistance information to which the data correspond (such as in subsequent step 805). For another example, in "Embodiment 4" in the "embodiments of the first aspect", the first device receives the "user equipment assistance information" reported by the user equipment, and in a case where the first device determines that at least one of the "user equipment assistance information" reported by the user equipment corresponds to the "user equipment assistance information to which the user equipment artificial intelligence related data correspond needing to be collected" indicated by the second device, the first device configures the user equipment to collect the artificial intelligence related data of the user equipment, and then transmits the artificial intelligence related data collected by the user equipment to the second device in subsequent step 805. Optionally, the first device may further transmit the user equipment assistance information and/or the network device assistance information to which the data correspond (such as in subsequent step 805).

Optionally, when the first device determines that the current at least one of network device assistance information is not consistent with the network device assistance information required by the second device, the first device may feed artificial intelligence related data collection failure information back to the second device.

Furthermore, if the second information includes valid time information, within a valid time indicated by the valid time information or within a timer running time to which the valid time information corresponds, the first device may confirm whether the network device assistance information of the first device is consistent with the network device assistance information required by the second device. When the first device determines that the current at least one of network device assistance information is consistent with the network device assistance information required by the second device, the first device performs corresponding artificial intelligence related data collection, and reference may be made to relevant contents in the "embodiments of the first aspect", which shall not be repeated herein any further. After a time indicated by the valid time information comes to an end or a timer to which the valid time information corresponds expires, the first device determines that at least one of its network device assistance information is not consistent with the network device assistance information required by the second device, and the first device may feed artificial intelligence related data collection failure information back to the second device.

805: The second device receives user equipment assistance information and/or network device assistance information transmitted by the first device according to the second information, and/or the second device receives collected artificial intelligence related data transmitted by the first device.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the above embodiment, the second device may receive the user equipment assistance information and/or the network device assistance information transmitted by the first device.

### Embodiments of a third aspect

The embodiments of this disclosure provide an information transceiving method, which shall be described from a first network device side, with contents identical to those in the embodiments of the first and second aspects being not going to be described herein any further.

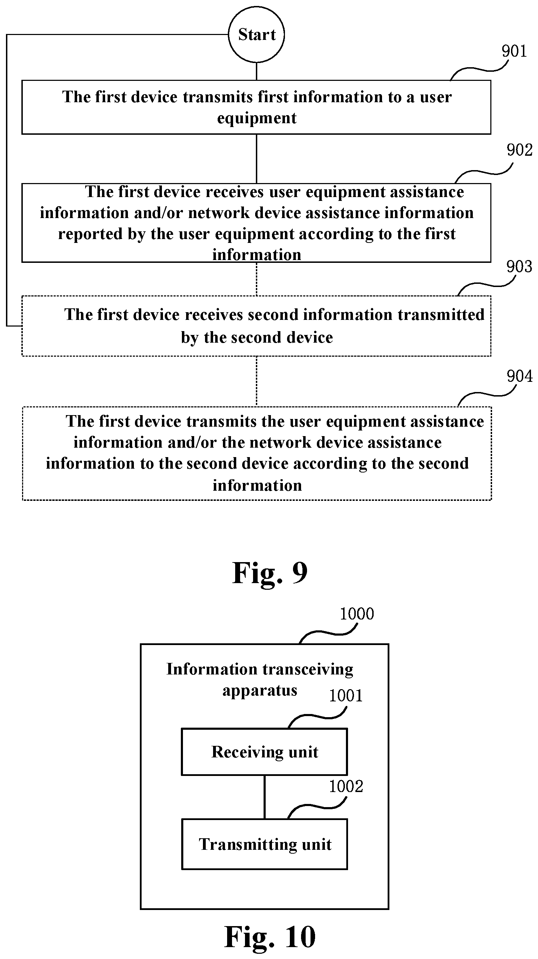

FIG. 9 is a schematic diagram of the information transceiving method of the embodiments of this disclosure. As shown in FIG. 9, the method includes:
901: The first device transmits first information to a user equipment; and
902: The first device receives user equipment assistance information and/or network device assistance information reported by the user equipment according to the first information.

According to the above embodiment, the user equipment transmits the user equipment assistance information and/or the network device assistance information to the first device according to the first information transmitted by the first device, so that the first device may better classify the received artificial intelligence related data according to the assistance information, thereby training more targeted models. And the first device may define applicability information of the trained models according to the assistance information, so that the models may obtain better model inference performances under the environment indicated by the applicability information.

In some embodiments, the first information includes at least one of the following information: first indication information; current network device assistance information of the first device; user equipment assistance information required by the first device; or first request indication information.

In some embodiments, the method further includes: the first device receives generation time information of artificial intelligence related data transmitted by the user equipment.

In some embodiments, the method further includes: the first device receives user equipment artificial intelligence related data collection capability information transmitted by the user equipment or a second device or other access network devices than the first device.

In some embodiments, the method further includes:
903: The first device receives second information transmitted by the second device; and
904: The first device transmits the user equipment assistance information and/or the network device assistance information to the second device according to the second information.

According to the above embodiment, the second device may accurately receive the user equipment assistance information and/or the network device assistance information transmitted by the first device.

Optionally, steps 903-904 may be implemented separately, or may be implemented together with steps 901-902, and the embodiments of this disclosure are not limited thereto.

In some embodiments, the second information includes second indication information, the second indication information requesting the first device to report the user equipment assistance information and/or the network device assistance information to which the collected artificial intelligence related data correspond.

In some embodiments, the second information includes user equipment assistance information and/or network device assistance information required by the second device.

In some embodiments, in a case where the second information includes the network device assistance information required by the second device, when the first device determines that current at least one of network device assistance information is consistent with the network device assistance information required by the second device, the first device determines to collect artificial intelligence related data to which the network device assistance information correspond; or, in a case where the second information includes the user equipment assistance information and network device assistance information required by the second device, when the first device determines that current at least one of network device assistance information is consistent with the network device assistance information required by the second device, the first device determines to collect the artificial intelligence related data to which the user equipment assistance information and the network device assistance information correspond.

In some embodiments, the method further includes: the first device transmits collected artificial intelligence related data to the second device.

In some embodiments, the method further includes: the first device receives user equipment artificial intelligence related data collection capability information transmitted by the user equipment or other access network devices than the first device or a core network device or OAM or an OTT server or an access network device management device, wherein the artificial intelligence related data collection capability information is used to indicate an artificial intelligence related data collection capability supported by the user equipment, and the first device stores the user equipment artificial intelligence related data collection capability information, and/or, the first device receives user equipment artificial intelligence related data collection permission information transmitted by the user equipment or other access network devices than the first device or the core network device or OAM or an OTT server or an access network device management device, wherein the artificial intelligence related data collection permission information is used to indicate whether the user equipment is willing to perform artificial intelligence related data collection, and/or is used to indicate information of an area where the user equipment is willing to perform artificial intelligence related data collection, and the first device stores the user equipment artificial intelligence related data collection permission information.

In some embodiments, the method further includes: the first device configures the user equipment according to the second information to perform artificial intelligence related data collection.

In the above embodiment, contents related to the first information, the second information, the user equipment assistance information and/or the network device assistance information are identical to those in the embodiments of first and second aspects, the contents of which being incorporated herein, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

According to the above embodiment, the user equipment transmits the user equipment assistance information and/or the network device assistance information to the first device according to the first information transmitted by the first device, so that the first device may better classify the received artificial intelligence related data according to the assistance information, thereby training more targeted models. And the first device may determine applicability information of the trained models according to the assistance information, so that the models may obtain better model inference performances under the configuration and/or environment indicated by the applicability information.

### Embodiments of a fourth aspect

The embodiments of this disclosure provide an information transceiving apparatus 1000.

FIG. 10 is a schematic diagram of the information transceiving apparatus of the embodiments of this disclosure. The apparatus may be, for example, a user equipment (UE), or may be one or some components or assemblies configured in the remote user equipment (UE). As a principle of the apparatus for solving problems is identical to that of the method in the embodiments of first aspect, reference may be made to the implementation of the method in the embodiments of the first aspect for implementation of this apparatus, with identical contents being not going to be repeated herein any further.

As shown in FIG. 10, the information transceiving apparatus 1000 includes:
a receiving unit 1001 configured to receive first information transmitted by a first device; and
a transmitting unit 1002 configured to report user equipment assistance information and/or network device assistance information to the first device according to the first information.

In some embodiments, the user equipment assistance information and/or network device assistance information include(s) at least one of the following information: user equipment (UE) environment information and/or configuration information; network device (NW) environment information and/or configuration information; user equipment (UE) location information; or identity information of a user equipment (UE) and/or a network device (NW).

In some embodiments, the user equipment (UE) environment information and/or configuration information includes at least one of the following information: speed information of the user equipment; computing speed information of the user equipment; or serving cell information of the user equipment.

In some embodiments, the network device (NW) environment information and/or configuration information include(s) at least one of the following information: antenna configuration information of the network device; beam configuration information of the network device; coverage configuration information of the network device; or state information of the network device.

In some embodiments, the identity information of the user equipment (UE) and/or the network device (NW) includes at least one of the following information: vendor information of the user equipment; chip vendor information of the user equipment; network vendor information of the network device; or operator information.

In some embodiments, the first information includes first indication information, and the transmitting unit 1002 reports, according to the first indication information, the user equipment assistance information corresponding to artificial intelligence related data when the artificial intelligence related data is generated.

In some embodiments, the transmitting unit 1002 further transmits generation time information of the artificial intelligence related data to the first device.

In some embodiments, the first information includes current network device assistance information of the first device, and the transmitting unit 1002 reports, according to the current network device assistance information of the first device, the user equipment assistance information and/or network device assistance information corresponding to the artificial intelligence related data when the artificial intelligence related data is generated.

In some embodiments, the first information further includes first indication information.

In some embodiments, the first information includes user equipment assistance information required by the first device.

In some embodiments, when the user equipment determines that current at least one of user equipment assistance information is consistent with the user equipment assistance information required by the first device, the transmitting unit 1002 reports the user equipment assistance information corresponding to the artificial intelligence related data when the artificial intelligence related data is generated and/or an acknowledgement message to the first device, wherein the acknowledgement message is used to indicate the user equipment has determined that the current at least one of user equipment assistance information is consistent with the user equipment assistance information required by the first device, and/or, when the user equipment determines that the current at least one of user equipment assistance information is not consistent with the user equipment assistance information required by the first device, the transmitting unit 1002 transmits an artificial intelligence related data collection configuration failure message to the first device.

In some embodiments, the first information includes first request indication information, and the transmitting unit 1002 reports the current user equipment assistance information of the user equipment according to the first request indication information.

In some embodiments, the receiving unit 1001 further receives report configuration information transmitted by the first device, wherein the report configuration information is used to indicate an assistance information report configuration of the user equipment.

In some embodiments, the report configuration information includes change report indication information of at least one of user equipment assistance information, and/or change threshold information of at least one of user equipment assistance information.

In some embodiments, in the case where the report configuration information includes change report indication information of at least one of user equipment assistance information, when the user equipment assistance information corresponding to at least one of the change report indication information of the user equipment is updated, the transmitting unit 1002 transmits at least one of updated user equipment assistance information to the first device; and/or, in the case where the report configuration information includes change threshold information of at least one of user equipment assistance information, when update of the at least one of user equipment assistance information of the user equipment satisfies the threshold information, the transmitting unit 1002 transmits the at least one of updated user equipment assistance information to the first device.

In some embodiments, the transmitting unit further transmits user equipment artificial intelligence related data collection capability information to the first device.

In the above embodiment, relevant contents of the first information, the second information, the user equipment assistance information and/or the network device assistance information are identical to those in the embodiments of the first and second aspects, the contents of which being incorporated herein, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the above apparatus may further include other components or modules, and reference may be made to related techniques for particulars of these components or modules. Furthermore, the above components or modules may be implemented by hardware, such as a processor, a memory, a transmitter, and a receiver, etc., which are not limited in the embodiments of this disclosure.

According to the above embodiment, the user equipment transmits the user equipment assistance information and/or the network device assistance information to the first device according to the first information transmitted by the first device, so that the first device may better classify the received artificial intelligence related data according to the assistance information, thereby training more targeted models. And the first device may determine applicability information of the trained models according to the assistance information, so that the models may be deployed in the configuration and/or environment indicated by the applicability information as possible, thereby obtaining better model inference performances.

### Embodiments of a fifth aspect

The embodiments of this disclosure provide an information transceiving apparatus.

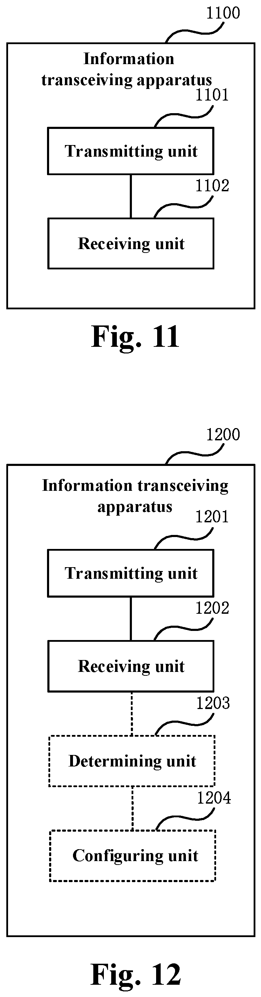

FIG. 11 is a schematic diagram of the information transceiving apparatus 1100 of the embodiments of this disclosure. The apparatus may be, for example, a second device, or may be one or some components or assemblies configured in the second device. As a principle of the apparatus for solving problems is identical to that of the method in the embodiments of second aspect, reference may be made to the implementation of the method in the embodiments of the second aspect for implementation of this apparatus, with identical contents being not going to be repeated herein any further.

As shown in FIG. 11, the information transceiving apparatus 1100 includes:
a transmitting unit 1101 configured to transmit second information to a first device; and
a receiving unit 1102 configured to receive user equipment assistance information and/or network device assistance information transmitted by the first device according to the second information.

In some embodiments, the second information includes second indication information, the second indication information requesting the first device to report user equipment assistance information and/or network device assistance information corresponding to collected artificial intelligence related data.

In some embodiments, the second information includes user equipment assistance information and/or network device assistance information required by the second device.

In some embodiments, the second information further includes valid time information, which is used to indicate a valid time of the above required user equipment assistance information and/or network device assistance information.

In some embodiments, the receiving unit 1102 further receives collected artificial intelligence related data transmitted by the first device.

In the above embodiment, relevant contents of the first information, the second information, the user equipment assistance information and/or the network device assistance information are identical to those in the embodiments of the first and second aspects, the contents of which being incorporated herein, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the above apparatus may further include other components or modules, and reference may be made to related techniques for particulars of these components or modules. Furthermore, the above components or modules may be implemented by hardware, such as a processor, a memory, a transmitter, and a receiver, etc., which are not limited in the embodiments of this disclosure.

According to the above embodiment, the second device may receive the user equipment assistance information and/or the network device assistance information transmitted by the first device.

### Embodiments of a sixth aspect

The embodiments of this disclosure provide an information transceiving apparatus.

FIG. 12 is a schematic diagram of the information transceiving apparatus 1200 of the embodiments of this disclosure. The apparatus may be, for example, a first device, or may be one or some components or assemblies configured in the first device. As a principle of the apparatus for solving problems is identical to that of the method in the embodiments of second aspect, reference may be made to the implementation of the method in the embodiments of the second aspect for implementation of this apparatus, with identical contents being not going to be repeated herein any further.

As shown in FIG. 12, the information transceiving apparatus 1200 includes:
a transmitting unit 1201 configured to transmit first information to a user equipment; and
a receiving unit 1202 configured to receive user equipment assistance information and/or network device assistance information reported by the user equipment according to the first information.

In some embodiments, the first information includes at least one of the following information: first indication information; current network device assistance information of the first device; user equipment assistance information required by the first device; or first request indication information.

In some embodiments, the receiving unit 1202 further receives generation time information of artificial intelligence related data transmitted by the user equipment.

In some embodiments, the receiving unit 1202 further receives user equipment artificial intelligence related data collection capability information transmitted by the user equipment or a second device or other access network devices than the first device.

In some embodiments, the receiving unit 1202 receives second information transmitted by the second device, and the transmitting unit 1201 transmits the user equipment assistance information and/or the network device assistance information to the second device according to the second information.

In some embodiments, the second information includes second indication information, the second indication information requesting the first device to report the user equipment assistance information and/or the network device assistance information to which the collected artificial intelligence related data correspond.

In some embodiments, the second information includes user equipment assistance information and/or network device assistance information required by the second device.

In some embodiments, the information transceiving apparatus 1200 further includes a determining unit 1203, and in a case where the second information includes the network device assistance information required by the second device, when the first device determines that current at least one of network device assistance information is consistent with the network device assistance information required by the second device, the determining unit 1203 determines to collect artificial intelligence related data to which the network device assistance information correspond; or, in a case where the second information includes the user equipment assistance information and network device assistance information required by the second device, when the first device determines that current at least one of network device assistance information is consistent with the network device assistance information required by the second device, the determining unit 1203 determines to collect the artificial intelligence related data to which the user equipment assistance information and the network device assistance information correspond.

In some embodiments, the transmitting unit 1201 transmits collected artificial intelligence related data to the second device.

In some embodiments, the receiving unit 1202 receives user equipment artificial intelligence related data collection capability information transmitted by the user equipment or other access network devices than the first device or a core network devices or OAM or an OTT server or an access network device management device, wherein the artificial intelligence related data collection capability information is used to indicate an artificial intelligence related data collection capability supported by the user equipment, and the first device stores the user equipment artificial intelligence related data collection capability information, and/or, the receiving unit 1202 receives user equipment artificial intelligence related data collection permission information transmitted by the user equipment or other access network devices than the first device or the core network device or OAM or an OTT server or an access network device management device, wherein the artificial intelligence related data collection permission information is used to indicate whether the user equipment is willing to perform artificial intelligence related data collection, and/or is used to indicate information of an area where the user equipment is willing to perform artificial intelligence related data collection, and the first device stores the user equipment artificial intelligence related data collection permission information.

In some embodiments, the information transceiving apparatus 1200 further includes a configuring unit 1204 configured to configure the user equipment according to the second information to perform artificial intelligence related data collection.

In the above embodiment, contents related to the first information, the second information, the user equipment assistance information and/or the network device assistance information are identical to those in the embodiments of first and second aspects, the contents of which being incorporated herein, which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the above apparatus may further include other components or modules, and reference may be made to related techniques for particulars of these components or modules. Furthermore, the above components or modules may be implemented by hardware, such as a processor, a memory, a transmitter, and a receiver, etc., which are not limited in the embodiments of this disclosure.

According to the above embodiment, the user equipment transmits the user equipment assistance information and/or the network device assistance information to the first device according to the first information transmitted by the first device, so that the first device may better classify the received artificial intelligence related data according to the assistance information, thereby training more targeted models. And the first device may determine applicability information of the trained models according to the assistance information, so that the models may obtain better model inference performances under the configuration and/or environment indicated by the applicability information.

### Embodiments of a seventh aspect

The embodiments of this disclosure provide a communication system, including a network device.

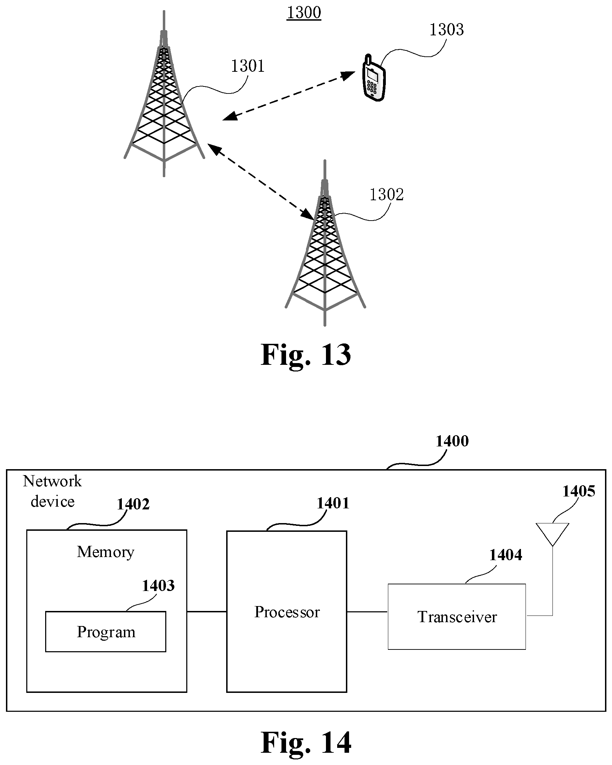

FIG. 13 is a schematic diagram of the communication system of the embodiments of this disclosure, in which a case where multiple network devices are taken as examples is shown. As shown in FIG. 13, the communication system 1300 may include a first network device 1301, a second network device 1302, and a user equipment 1303.

In some embodiments, the user equipment 1303 is configured to execute the method described in the embodiments of the first aspect. As the method has been described in detail in the embodiments of the first aspect, the contents thereof are incorporated herein by reference, and shall not be repeated herein any further.

In some embodiments, the second network device 1302 is configured to execute the method described in the embodiments of the second aspect. As the method has been described in detail in the embodiments of the second aspect, the contents thereof are incorporated herein by reference, and shall not be repeated herein any further.

In some embodiments, the first network device 1301 is configured to execute the method described in the embodiments of the third aspect. As the method has been described in detail in the embodiments of the third aspect, the contents thereof are incorporated herein by reference, and shall not be repeated herein any further.

The embodiments of this disclosure further provide a network device, which may, for example, be a base station or a CU or a DU; however, this disclosure is not limited thereto, and it may also be another network device.

FIG. 14 is a schematic diagram of the network device of the embodiments of this disclosure. As shown in FIG. 14, the network device 1400 may include a processor 1401 and a memory 1402, the memory 1402 being coupled to the processor 1401. Wherein, the memory 1402 may store various data, and furthermore, it may store a program 1403 for information processing, and execute the program under control of the processor 1401.

In some embodiments, the functions of the apparatus in the embodiments of the second or third aspect may be integrated into the processor 1401, wherein the processor 1401 may be configured to carry out the method in the embodiments of the second or third aspect, the contents of which being incorporated herein, and being not going to be described herein any further.

In some other embodiments, the apparatus in the embodiments of the second or third aspect and the processor 1401 may be configured separately; for example, the apparatus in the embodiments of the third aspect may be configured as a chip connected to the processor 1401, and the functions of the apparatus in the embodiments of the third aspect are executed under control of the processor 1401.

Furthermore, as shown in FIG. 14, the network device 1400 may include a transceiver 1404, and an antenna 1405, etc., wherein functions of the above components are similar to those in the relevant art, and shall not be described herein any further. It should be noted that the network device 1400 does not necessarily include all the parts shown in FIG. 14, and furthermore, the network device 1400 may include parts not shown in FIG. 14, and the relevant art may be referred to.

The embodiments of this disclosure further provide a user equipment; however, this disclosure is not limited thereto, and it may also be another equipment.

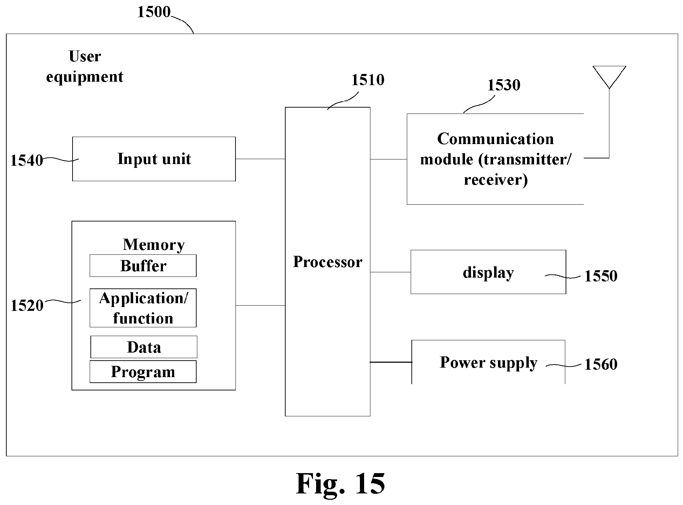

FIG. 15 is a schematic diagram of the user equipment of this embodiment. As shown in FIG. 15, the user equipment 1500 may include a processor 1510 and a memory 1520, the memory 1520 storing data and programs and being coupled to the processor 1510. It should be noted that this figure is illustrative, and other types of structures may also be used to supplement or replace this structure, so as to implement telecommunications functions or other functions.

For example, the processor 1510 may be configured to execute a program to carry out the method in the embodiments of the first aspect, the contents of which being incorporated herein, and being not going to be described herein any further.

As shown in FIG. 15, the user equipment 1500 may further include a communication module 1530, an input unit 1540, a display 1550, and a power supply 1560. Functions of the above components are similar to those in the relevant art and shall not be repeated herein any further. It should be noted that the user equipment 1500 does not necessarily include all the components shown in FIG. 15, and the above components are not necessary. Furthermore, the user equipment 1500 may include components not shown in FIG. 15, and reference may be made to the relevant art.

Embodiments of this disclosure provide a computer program, which, when executed in a user equipment, will cause the user equipment to carry out the method described in the embodiments of the first aspect.

Embodiments of this disclosure provide a storage medium, including a computer program, which will cause a user equipment to carry out the method described in the embodiments of the first aspect.

Embodiments of this disclosure provide a computer program, which, when executed in a network device, will cause the network device to carry out the method described in the embodiments of the second or third aspect.

Embodiments of this disclosure provide a storage medium, including a computer program, which will cause a network device to carry out the method described in the embodiments of the second or third aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 9 may either correspond to software modules of procedures of a computer program, or correspond to hardware modules. Such software modules may respectively correspond to the steps shown in FIG. 2. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the figures may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the spirits and principle of this disclosure, and such variants and modifications fall within the scope of this disclosure.

As to implementations including the above embodiment, following supplements are further disclosed.
1. An information transceiving method, applicable to a user equipment (UE) side, wherein the method includes:
   receiving, by the user equipment, first information transmitted by a first device; and
   reporting user equipment assistance information and/or network device assistance information by the user equipment to the first device according to the first information.
2. An information transceiving method, applicable to a second device side, wherein the method includes:
   transmitting second information by the second device to a first device; and
   receiving, by the second device, user equipment assistance information and/or network device assistance information transmitted by the first device according to the second information.
3. An information transceiving method, applicable to a first device side, wherein the method includes:
   transmitting first information by the first device to a user equipment; and
   receiving, by the first device, user equipment assistance information and/or network device assistance information reported by the user equipment according to the first information.
4. The method according to supplement 3, wherein the method includes:
   receiving, by the first device, second information transmitted by the second device; and
   transmitting user equipment assistance information and/or network device assistance information by the first device to the second device according to the second information.
5. The method according to supplement 4, wherein the second information includes second indication information, the second indication information requesting the first device to report user equipment assistance information and/or network device assistance information corresponding to collected artificial intelligence related data.
6. The method according to supplement 5, wherein the second information includes user equipment assistance information and/or network device assistance information required by the second device.
7. The method according to supplement 6, wherein in a case where the second information includes the network device assistance information required by the second device, when the first device determines that current at least one of network device assistance information is consistent with the network device assistance information required by the second device, the first device determines to collect artificial intelligence related data to which the network device assistance information correspond; or, in a case where the second information includes the user equipment assistance information and network device assistance information required by the second device, when the first device determines that current at least one of network device assistance information is not consistent with the network device assistance information required by the second device, the first device determines to collect the artificial intelligence related data to which the user equipment assistance information and the network device assistance information correspond.
8. The method according to supplement 4, wherein the method further includes:
   receiving, by the first device, user equipment artificial intelligence related data collection capability information transmitted by the user equipment or other access network devices than the first device or the core network device or OAM or an OTT server or an access network device management device, wherein the artificial intelligence related data collection capability information is used to indicate an artificial intelligence related data collection capability supported by the user equipment, and correspondingly, the first device stores the user equipment artificial intelligence related data collection capability information; and/or, receiving, by the first device, user equipment artificial intelligence related data collection permission information transmitted by the user equipment or other access network devices than the first device or the core network device or OAM or an OTT server or an access network device management device, wherein the artificial intelligence related data collection permission information is used to indicate whether the user equipment is willing to perform artificial intelligence related data collection, and/or is used to indicate information of an area where the user equipment is willing to perform artificial intelligence related data collection, and storing the user equipment artificial intelligence related data collection permission information by the first device.
9. A device, including a memory and a processor, the memory storing a computer program, and the processor being configured to execute the computer program to carry out the method as described in any one of supplements 1-8.
10. A communication system, characterized in that the communication system includes the device as described in supplement 9.

## Claims

1. An information transceiving apparatus, configured in a user equipment (UE), wherein the apparatus comprises:
a receiving unit configured to receive first information transmitted by a first device; and
a transmitting unit configured to report user equipment assistance information and/or network device assistance information to the first device according to the first information.

2. The apparatus according to claim 1, wherein the user equipment assistance information and/or network device assistance information comprise(s) at least one of the following information:
user equipment (UE) environment information and/or configuration information;
network device (NW) environment information and/or configuration information;
user equipment (UE) location information; or
identity information of a user equipment (UE) and/or a network device (NW).

3. The apparatus according to claim 2, wherein the user equipment (UE) environment information and/or configuration information comprise(s) at least one of the following information:
speed information of the user equipment;
computing speed information of the user equipment;
serving cell information of the user equipment; or
channel model information between the user equipment and the network device.

4. The apparatus according to claim 2, wherein the network device (NW) environment information and/or configuration information comprise(s) at least one of the following information:
antenna configuration information of the network device;
beam configuration information of the network device;
coverage configuration information of the network device; or
state information of the network device.

5. The apparatus according to claim 2, wherein the identity information of the user equipment (UE) and/or the network device (NW) comprises at least one of the following information:
vendor information of the user equipment;
chip vendor information of the user equipment;
network vendor information of the network device; or
operator information.

6. The apparatus according to claim 2, wherein the first information comprises first indication information, and the transmitting unit reports, according to the first indication information, the user equipment assistance information corresponding to artificial intelligence related data when the artificial intelligence related data is generated.

7. The apparatus according to claim 6, wherein the transmitting unit further transmits generation time information of the artificial intelligence related data to the first device.

8. The apparatus according to claim 2, wherein the first information comprises current network device assistance information of the first device, and the transmitting unit reports, according to the current network device assistance information of the first device, the user equipment assistance information and/or network device assistance information corresponding to the artificial intelligence related data when the artificial intelligence related data is generated.

9. The apparatus according to claim 8, wherein the first information further comprises first indication information.

10. The apparatus according to claim 2, wherein the first information comprises user equipment assistance information required by the first device.

11. The apparatus according to claim 10, wherein when the user equipment determines that current at least one of user equipment assistance information is consistent with the user equipment assistance information required by the first device, the transmitting unit reports the user equipment assistance information corresponding to the artificial intelligence related data when the artificial intelligence related data is generated and/or an acknowledgement message to the first device, wherein the acknowledgement message is used to indicate the user equipment has determined that the current at least one of user equipment assistance information is consistent with the user equipment assistance information required by the first device, and/or,
when the user equipment determines that the current at least one of user equipment assistance information is not consistent with the user equipment assistance information required by the first device, the transmitting unit transmits an artificial intelligence related data collection configuration failure message to the first device.

12. The apparatus according to claim 2, wherein the first information comprises first request indication information, and the transmitting unit reports current user equipment assistance information of the user equipment according to the first request indication information.

13. The apparatus according to claim 12, wherein the receiving unit further receives report configuration information transmitted by the first device, wherein the report configuration information is used to indicate an assistance information report configuration of the user equipment.

14. The apparatus according to claim 13, wherein the report configuration information comprises change report indication information of at least one of user equipment assistance information, and/or change threshold information of at least one of user equipment assistance information.

15. The apparatus according to claim 14, wherein in the case where the report configuration information comprises change report indication information of at least one of user equipment assistance information, when the user equipment assistance information corresponding to at least one of the change report indication information of the user equipment is updated, the transmitting unit transmits at least one of updated user equipment assistance information to the first device; and/or,
in the case where the report configuration information comprises change threshold information of at least one of user equipment assistance information, when update of the at least one of user equipment assistance information of the user equipment satisfies the threshold information, the transmitting unit transmits the at least one of updated user equipment assistance information to the first device.

16. The apparatus according to any one of claims 1-15, wherein the transmitting unit further,
transmits user equipment artificial intelligence related data collection capability information to the first device.

17. An information transceiving apparatus, configured in a second device, wherein the apparatus comprises:
a transmitting unit configured to transmit second information to a first device; and
a receiving unit configured to receive user equipment assistance information and/or network device assistance information transmitted by the first device according to the second information.

18. The apparatus according to claim 17, wherein,
the second information comprises second indication information, the second indication information requesting the first device to report user equipment assistance information and/or network device assistance information corresponding to collected artificial intelligence related data; and/or
the second information comprises user equipment assistance information and/or network device assistance information required by the second device.

19. An information transceiving apparatus, configured in a first device, wherein the apparatus comprises:
a transmitting unit configured to transmit first information to a user equipment; and
a receiving unit configured to receive user equipment assistance information and/or network device assistance information reported by the user equipment according to the first information.

20. The apparatus according to claim 19, wherein,
the receiving unit receives second information transmitted by a second device;
and the transmitting unit transmits user equipment assistance information and/or network device assistance information to the second device according to the second information.
